# EUROPEAN PATENT SPECIFICATION

(11) **EP 0 989 648 B1**
(45) Date of publication and mention of the grant of the patent: **26.11.2003**
(21) Application number: 99115674.6
(22) Date of filing: 09.08.1999
(51) Int. Cl.: H02B 1/04, H02G 3/18

(54) **System for securing electrical apparatuses in a supporting frame**
Vorrichtung zum Befestigung elektrischer Geräten in einem Tragrahmen
Dispositif pour fixer des appareils électriques dans un cadre support

(30) Priority: 25.09.1998 IT MI982072
(43) Date of publication of application: 29.03.2000
(73) Proprietor: Vimar SpA, 36063 Marostica (VI) (IT)
(72) Inventor: Gusi, Piero Camillo, 36063 Marostica (VI) (IT)
(74) Representative: Petruzziello, Aldo

(56) References cited:
- DE-A- 3 518 109
- DE-A- 19 716 906
- US-A- 5 667 059

## Description

The present invention relates to a system for securing electrical apparatuses in a supporting frame, particularly for recessed, wall-mounted or table-top installations.

There are currently available on the market various types of containing boxes or supporting frames able to accommodate electrical apparatuses such as switches, sockets, pushbuttons, lights and other types of audible or visible signalling devices.

Such known supporting frames can be of different sizes depending upon the number of apparatuses they must contain and normally take the shape of a square or rectangular frame, the inner aperture of which is destined to accommodate a plurality of modular apparatuses side by side. Fixing of the apparatuses to the frame usually takes place through elastic means carried by the apparatus which engage in special seats provided on the opposite walls of the frame or vice versa. The securing operation is completed by removably fixing a cover plate on the frame, the fastening means thereof allowing possible adjustment of the distance to compensate for any tolerances during assembly

The fixing systems between the apparatuses and the supporting frame normally work by thrust against the two opposite walls of the frame, which gives rise to problems of deformation, twisting or bulging of the frame, especially if it is intended to accommodate a large number of apparatuses, making the snap retention of the apparatuses in the frame unsure.

In the housing sector and the services industry there are different installation requirements for the apparatuses in the supporting frame. Sometimes it is advantageous, as far as installation is concerned, to insert the apparatuses from the front of the frame (in channels or in recessed applications), whilst sometimes insertion from the rear is advantageous (in sealed containers and in wall-mounted applications in general). For this reason, there are essentially two types of frames on the market, one with provision for securing the apparatuses from the front and the other with provision for securing from the rear.

In almost all cases, the securing systems between the apparatuses and the supporting frames according to the prior art have little flexibility and versatility because different types of apparatuses that adapt to the different types of supporting frames must be provided. In particular different types of apparatuses exist for insertion into the supporting frame from the front or from the rear.

The object of the invention is to eliminate said drawbacks by providing a system for securing electrical apparatuses in a supporting frame that is economical, versatile, safe and easy to make.

Another object of the invention is to provide such a securing system between a single type of apparatus and different types of supporting frames that allows installation of the apparatuses either from the rear or from the front in order to better exploit the characteristics and installation types of each individual type of supporting frame.

These objects are achieved according to the invention with the characteristics listed in appended independent claim 1.

Preferred embodiments of the invention are apparent from the dependent claims.

In the system for securing electrical apparatuses in a supporting frame according to the invention, a special mask or cover is provided for application to an apparatus to allow fixing thereof both to supporting frames that provide for insertion from the front and to supporting frames with insertion from the rear.

Essentially, pairs of "dovetail" shaped tongues are provided on the apparatus, that is having opposed teeth in the axial direction of the apparatus. During insertion of the apparatus in the frame, said tongues slide and are guided in appropriate seats made facing each other in the horizontal walls of the frame, so that when the apparatus is completely inserted, in the end of stroke position, the teeth engage in appropriate cavities made on the bottom of the respective seats, thus withstand the forces tending to push the horizontal walls of the frame apart (so-called bulging).

Fixing of the apparatus in the axial direction of insertion, on the other hand, is achieved by means of elastic tongues provided in the frame, which snap into the corresponding seats provided on the apparatus.

For frames that allow installation of the apparatuses from the front a covering element (like a plate) is provided that fastens by means of appendages or tongues to the assembly formed by the supporting frame and the apparatuses. Said cover plate ensures that the supporting frame and the apparatuses are retained and prevents accidental unfastening of the apparatuses due to the forces exerted from the outside.

It is evident that the system for securing electrical apparatuses in a supporting frame proves extremely versatile because it allows the apparatuses to be inserted both in frames that provide for insertion from the front and in frames that provide for insertion from the rear. Furthermore, said system, though being of extremely simple construction and easy for the operator to fit together, is extremely sound and able to avoid possible detachment of the apparatuses from the frame.

Further characteristics of the invention will be made clearer by the detailed description that follows, referring to a purely exemplary and therefore non-limiting embodiment thereof, illustrated in the appended drawings in which:
Figure 1 is an axonometric, exploded view of the securing system, with insertion of the electrical apparatuses from the front of a supporting frame, according to a first embodiment of the invention;
Figure 2 is an axonometric cutaway view, partially in cross section, showing an apparatus mounted on the supporting frame, with a cover plate being inserted;
Figure 3 is an enlarged view of the part enclosed in the circle A in Figure2;
Figure 4 is an enlarged view of the part enclosed in the circle B in Figure 2;
Figure 5 is cross section showing an apparatus mounted on the supporting frame and also showing the right-hand half of the cover plate fitted in the frame;
Figure 6 is an enlarged view of the part enclosed in the circle C in Figure 5;
Figure 7 is an enlarged view of the part enclosed in the oval D in Figure 5;
Figure 8 is an axonometric view of a supporting frame for insertion of the apparatuses from the rear according to a second embodiment of the invention;
Figure 9 is an axonometric view of the frame in Figure 8 overturned;
Figure 10 is an axonometric cutaway view in part section, showing an apparatus mounted on the supporting frame of Figure 8;
Figure 11 is an enlarged view of the part enclosed in the oval E in Figure 10;
Figure 12 is an enlarged view of the part enclosed in the circle F in Figure 10;
Figure 13 is a cross section showing an apparatus mounted on the frame in Figure 8, taken along two half-planes passing through a tongue provided on the apparatus and through the midline of said apparatus, respectively;
Figure 14 is an enlarged view of the part enclosed in the circle G in Figure 13;
Figure 15 is an enlarged view of the part enclosed in the oval H in Figure 13.

The system for securing electrical apparatuses in a supporting frame according to the invention will be described with the aid of the figures.

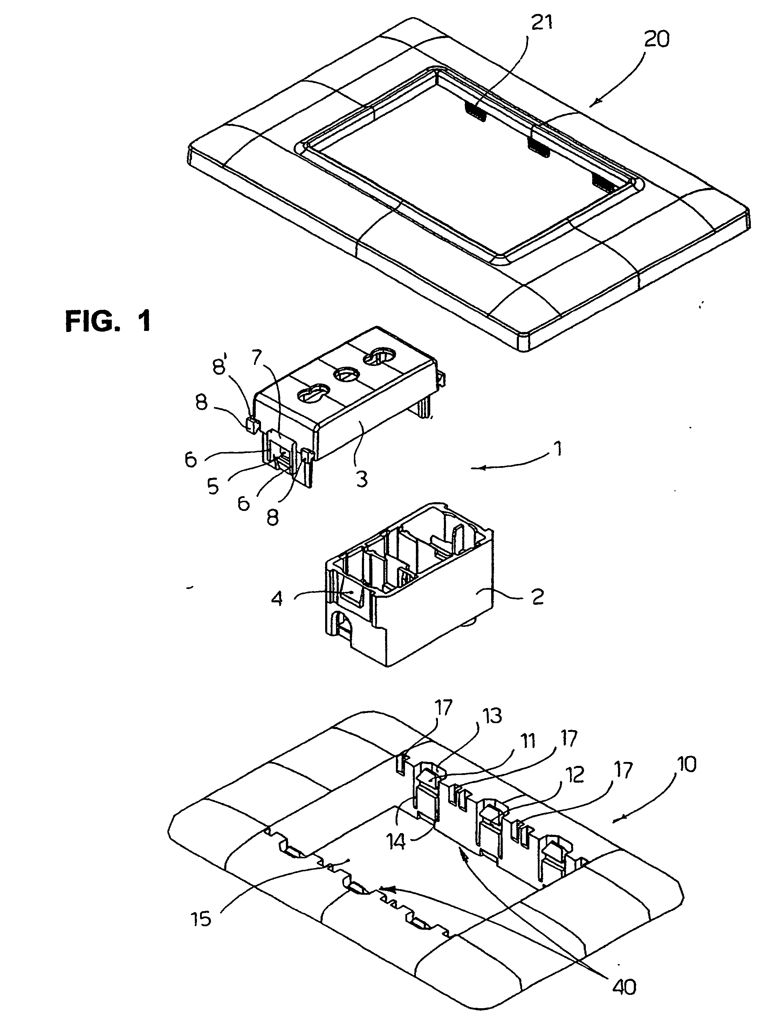

With reference to Figure 1, the numeral 1 denotes a modular electrical apparatus, consisting in this instance of a an electrical socket, comprising a body 2 and a cover 3, enclosing inside them the electrical components necessary for operation of the equipment. The body 2 is shaped substantially like a parallelepiped box. In the outer surface of the two opposite shorter sides of the body 2 there are two teeth 4 designed to engage respectively with two through cavities 5 made in the cover 3. In this manner by pressing the cover 3 onto the body 2 engagement of the teeth 4 in the corresponding cavities 5 is achieved.

In the cover 3, alongside each cavity 5, two parallel, longitudinally disposed tracks 6 are situated. The two tracks 6 are joined by a crosspiece 7 so as to obtain a protrusion with a substantially upturned U-shape, which surrounds the cavity 5.

On each side of the cover 3, alongside the crosspiece 7, there is a pair of dovetail-shaped tongues 8. Each tongue 8 has opposed teeth 8' in the axial direction of the apparatus 1.

The apparatuses are modular in size, so as to be able to be mounted, in the manner that will be described hereunder, in a supporting frame 10 which purely by way of example, in Figure 1 is shown rectangular in shape and destined to accommodate three apparatuses. The supporting frame 10 is frame-shaped, with a large aperture 15 for insertion of the apparatuses. The aperture 15 forms a window having two opposite walls 40 for snap assembly of the apparatuses 1.

In the inside surface of the walls 40 of the frame 10 there are cavities 13, opened at the front, inside which rise flexible teeth 11 connected at the back to the walls 40. In this manner between the sidewalls of each tooth 11 and the corresponding walls of the cavity 13 two hollow spaces 14 are formed. Each tooth 11 has a seat 12 formed by means of a transverse notch. In each wall 40 of the frame 10, alongside each cavity 13 a pair of seats 17, opened in the front part of the wall 40, is made.

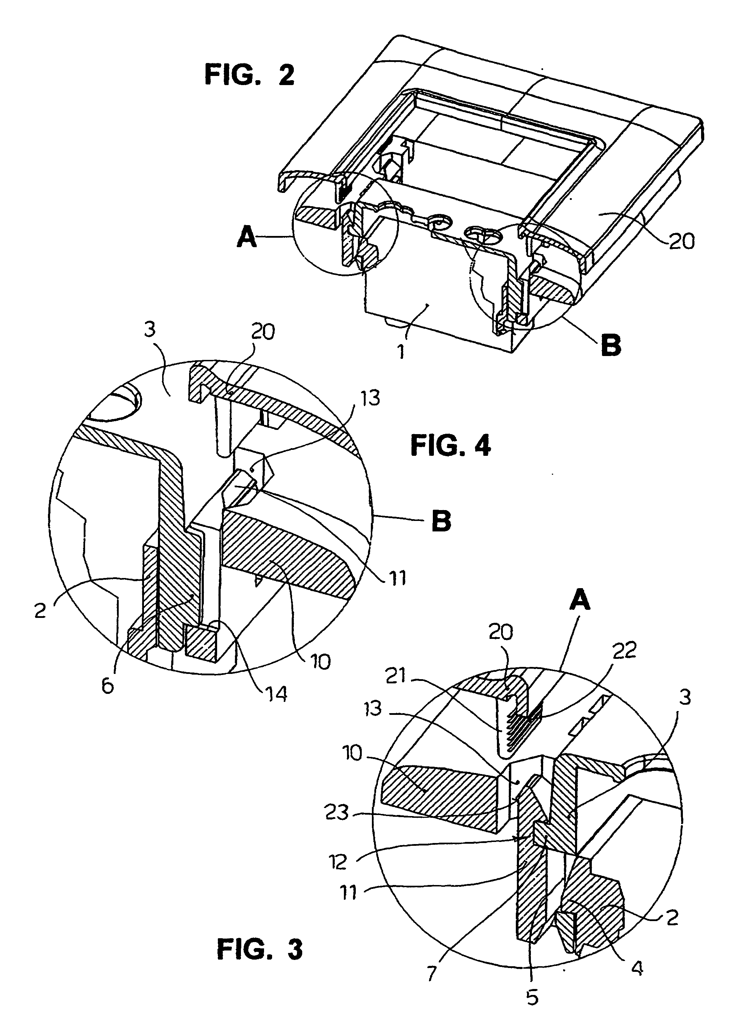

When the apparatus 1 is inserted from the front of the frame 10, as shown in Figures 2 and 4, the tracks 6 slide in the respective hollow spaces 14, so as to guide the apparatus during insertion. The crosspiece 7 pushes the tooth 11 toward the inside of the cavity 13 until the crosspiece 7, as shown in Figures 2, 3, 5 and 7, snaps into the transverse seat 12 made in the tooth 11, so as to block the apparatus 1.

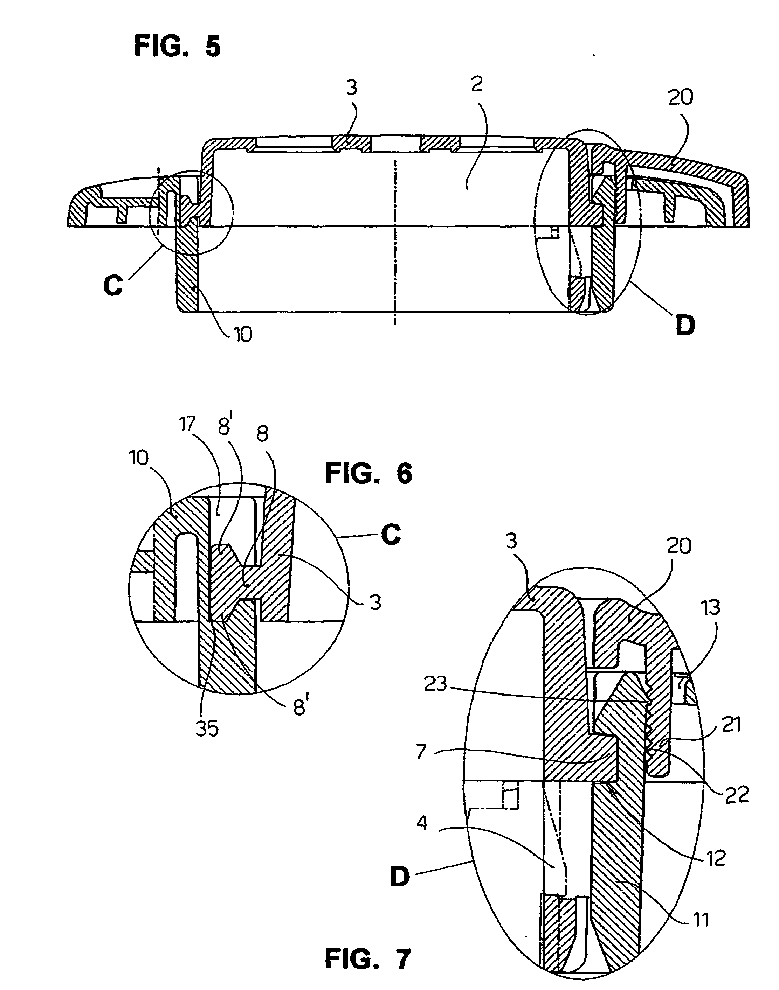

As shown in Figures 5 and 6, the tongues 8 engage in the respective seats 17 and slide therein until the apparatus 1 is completely inserted, thus in the end of stroke position, the teeth 8' of the tongues 8 engage in corresponding cavities 35 made on the bottom of the seats 17. In this manner an effect of locking the apparatus 1 on the frame 10 is achieved. In fact, especially in the case of frames destined to accommodate a large number of apparatuses, engagement of the teeth 8' of the tongues 8 in the respective cavities 35 of the seats 17 provides greater stability of the apparatuses 1 on the frame 10, thus avoiding bulging or drawing apart of the opposite walls 40 of the frame.

The assembly is usually completed by a cover plate 20, which can be obtained for example by molding of plastics or by die-casting of plastic and metal, which essentially reproduces the frame shape of the frame. As shown in Figures 2, 3, 5 and 7, said plate 20 has tongues 21 on the inside that are designed to be inserted in the corresponding cavities 13 of the frame 10, between the tooth 11 and the wall 40. The tongues 21 appropriately have a serrated surface 22 that engages with a protrusion 23 made on the tooth 11 to secure the plate 20 once it is inserted. The tongues 21 furthermore prevent elastic deformation of the tooth 11, thus avoiding possible shifting of the apparatuses 1.

As it has been shown above, the cover plate 20 engages simultaneously, by means of the tongues 21, with the assembly formed by the supporting frame 10 and the apparatuses 1. The cover plate 20, therefore, ensures that the supporting frame 10 and the apparatuses 1 are retained and constitutes a stopping surface for the apparatuses 1, avoiding accidental unfastening thereof due to external stress, such as the traction exerted by an operator when he wants to remove a plug from the apparatus.

In order to remove the apparatus 1, it is sufficient to remove the cover plate 20, by means of a screwdriver or any other suitable means, exert pressure on the tooth 11 of the frame 10 to cause a movement thereof and then release it from the cavity 5 of the apparatus 1 and lastly remove the apparatus 1 manually.

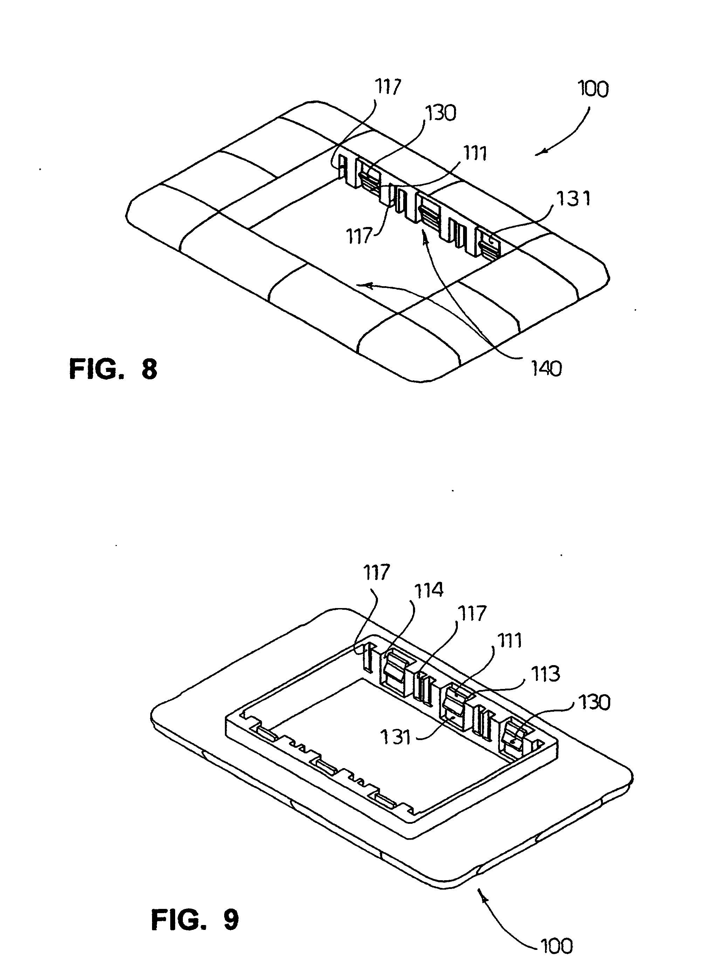

In Figures 8-15 a further embodiment of the invention is shown, wherein the same reference numerals as in the preceding figures have been used for elements that are the same or equivalent. In said embodiment of the invention a supporting frame 100, which provides for insertion of the apparatuses from the rear is provided. The shape of the apparatuses 1 remains identical to that described in the first embodiment. In this second embodiment the frame 100 has two opposite walls 140 for insertion of the apparatuses, substantially upside-down with respect to the walls 40 of the first embodiment of the frame 10.

With reference to Figures 8 and 9, on the inner surfaces of the walls 140 of the frame 100 rectangular cavities 113 opened at the rear are made. As can be seen from Figure 9, which represents the frame 100 upturned, teeth 111 connected to the walls 140 and protruding rearward therefrom are placed in the cavities 113, so as to form hollow spaces 114 that extend longitudinally between the lateral surfaces of the tooth 111 and the corresponding surfaces of the cavity 113. Each tooth 111 has a transverse protrusion 130, so as to create a seat 131 between the upper surface of the protrusion and the surface of the walls 140. Alongside each cavity 113 extend two seats 117, opened in the rear part of the walls 140.

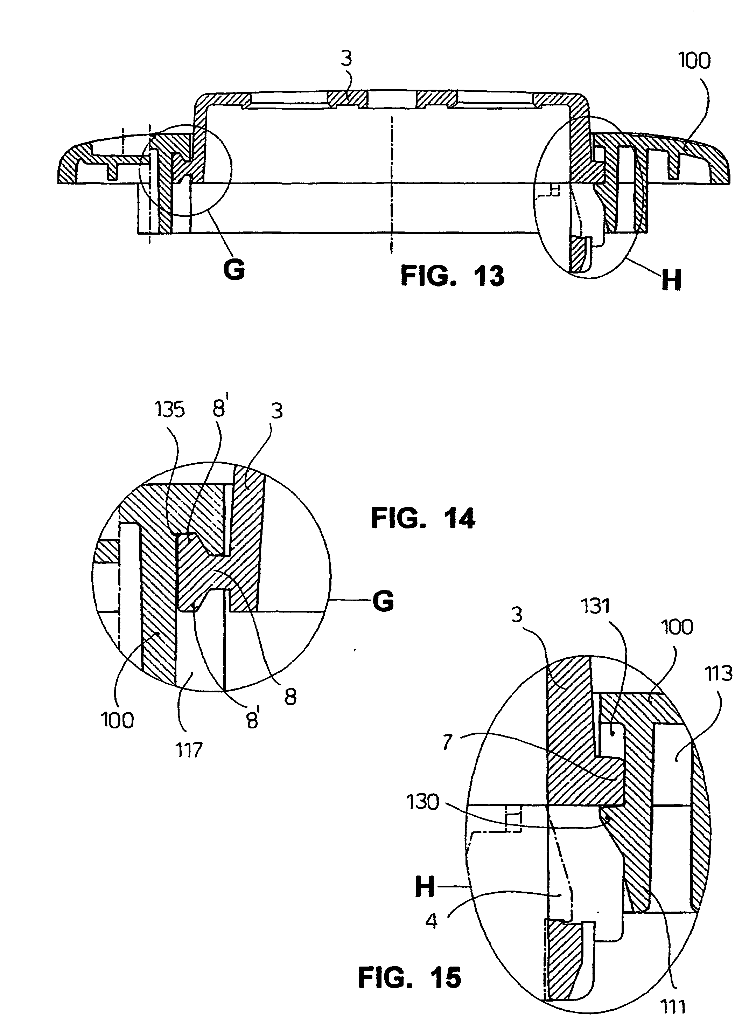

With reference to Figures 13 and 14, when the apparatus 1 is inserted in the supporting frame 100 from the rear, the tongues 8 of the apparatus 1 enter the seats 117 of the frame 100 and slide therein guiding the apparatus 1, until they embed the teeth 8' of the tongues 8 in respective cavities 135, situated on the bottom of the seats 117.

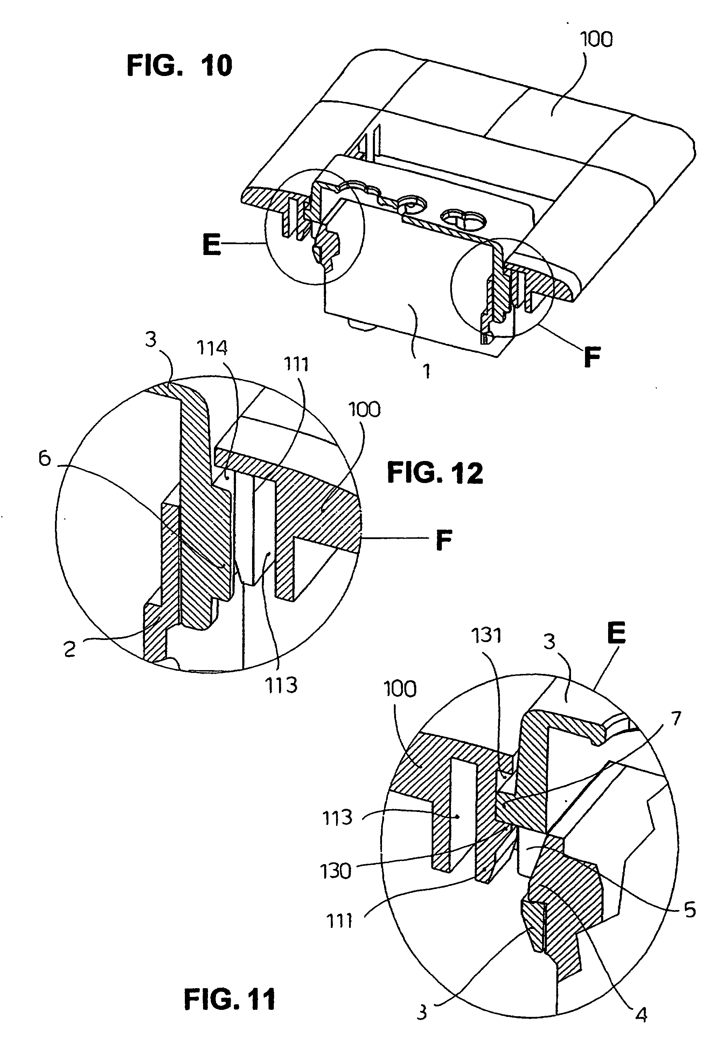

With reference to Figures 10, 12 the tracks 6 of the apparatus 1 enter the hollow spaces 114 formed in the frame 100, guiding the apparatus 1 as it slides toward the front part of the support 100.

As it can be seen from figures 10, 11, 13 and 15, the crosspiece 7 of the cover 3 of the apparatus 1 pushes the tooth 111 causing elastic bending thereof, until it passes beyond the protrusion 130 of the tooth 111 and then embeds itself in the seat 131, so as to block the apparatus 1.

In this case also removal of the apparatus is obtained by means of a light pressure exerted by appropriate means on the tooth 111, so as to cause elastic bending of the tooth 11 and thus allow disengagement of the protrusion 130 of the tooth from the crosspiece 7 of the cover 3 of the apparatus 1.

From the foregoing, the characteristics and advantages of the invention, which permits secure assembly of the apparatuses in the special supporting frames, are evident. In particular, insertion of the teeth 8' of the tongues 8 of the apparatuses in the respective end-of-stroke cavities 35, 135 of the sliding seats 17, 117, causes a better hold and stability of the apparatuses 1 on the frame 10, thus avoiding unfastening or drawing apart of the opposite walls 40, 140 of the frame 10, 100, which occurs above all in supporting frames that provide for accommodation of several apparatuses.

## Claims

1. A system for securing electrical apparatuses (1) in a supporting frame (10, 100), the frame (10, 100) having a window (15) with opposite walls (40, 140) provided with means for snap assembly of apparatuses (1), **characterized in that** between said apparatuses (1) and said opposite walls (40, 140) of the frame complementary means (8), (17, 117) consisting respectively of tongues and corresponding sliding seats, or vice versa, are provided, such that in the end of stroke position of the tongues (8) in the seats (17, 117) a tight engagement occurs which prevents said opposite walls (40, 140) from drawing apart

2. A system according to claim 1, wherein said tongues (8) are provided on the apparatus (1) and said seats (17, 117) on the opposite walls (40, 140) of the frame (10, 100).

3. A system according to claim 1 or 2, **characterized in that** said tongues (8) are dovetail-shaped with two axially opposed teeth able to selectively fit in corresponding cavities (35, 135) provided on the bottom of said seats (17, 117).

4. A system according to claim 2 or 3, **characterized in that** each of said seats (17) is opened in the front part of the wall (40) of the frame (10) so as to permit insertion of the apparatus (1) from the front of the frame (10).

5. A system according to claim 2 or 3 **characterized in that** each of said seats (17) is opened in the rear part of the wall (140) of the frame (100) so as to permit insertion of the apparatus (1) from the rear of the frame (100).

6. A system according to claim 1 and one or more of the preceding claims, **characterized in that** said means for snap assembly of the apparatuses in the walls (40, 140) of said support (10, 100) consist of flexible teeth (11, 111) that engage in respective cavities (5) provided in the apparatuses (1).

7. A system according to claim 6, **characterized in that**, between said teeth (11, 111) and said walls (40, 140), longitudinal cavities (14, 114) are formed that act as guides for parallel tracks (6) disposed longitudinally in said apparatuses (1).

8. A system according to claim 6 or 7, **characterized in that** said teeth (11) have a transverse notch (12) in which a crosspiece (7) disposed transversally in said apparatus (1) snap fits to ensure locking of the apparatus (1) on the supporting frame (10).

9. A system according to claim 6 or 7, **characterized in that** said teeth (111) have a protrusion (130) transversally destined to abut against a crosspiece (7) disposed transversally in the apparatus (1) to ensure that the apparatus (1) is locked on the supporting frame (100).

10. A system according to any one of the preceding claims, **characterized in that** a cover plate (20) is provided such as to cover the frame (10), once the apparatuses have been mounted, said cover plate (20) having tongues (21) destined to be inserted in corresponding cavities (13) of the frame to lock the teeth (11).

11. A system according to claim 10, **characterized in that** said tongues 21 of the cover plate (20) are a joining element between said plate and the assembly of frame (10) and apparatuses (1).

## Patentansprüche

1. Ein System zur Verankerung elektrischer Geräte (1) in einen Tragrahmen (10, 100), wobei der Rahmen (10, 100) ein Fenster (15) mit gegenüberliegenden Wänden (40, 140) aufweist, die mit Elementen für die Schnappmontage von Geräten (1) ausgerüstet sind, **dadurch gekennzeichnet, dass** zwischen den genannten Geräten (1) und den genannten gegenüberliegenden Wänden (40, 140) des Rahmens ergänzende Elemente (8), (17, 117) vorgesehen sind, die jeweils aus Flügeln und den entsprechenden Gleitsitzen bestehen, oder umgekehrt, so dass eine dicht schließende Einrastung in den Sitzen (17, 117) an der Endstellung des Flügelhubs (8) entsteht, die die genannten gegenüberliegenden Wänden (40, 140) daran hindert, sich voneinander zu entfernen.

2. Ein System gemäß Anspruch 1, wobei die genannten Flügel (8) am Gerät (1) vorgesehen sind und die genannten Sitze (17, 117) an den gegenüberliegenden Wänden (40, 140) des Rahmens (10, 100).

3. Ein System gemäß Anspruch 1 oder 2, **dadurch gekennzeichnet, dass** die genannten Flügel (8) schwalbenschwanzförmig mit zwei axial gegenüberliegenden Zähnen sind, die in der Lage sind, wahlweise in entsprechende Hohlräume (35, 135) einzurasten, die am Boden der genannten Sitze (17, 117) vorgesehen sind.

4. Ein System gemäß Anspruch 2 oder 3, **dadurch gekennzeichnet, dass** jeder der genannten Sitze (17) an der Vorderseite der Wand (40) des Rahmens (10) offen ist, so dass das Einsetzen des Geräts (1) von der Vorderseite des Rahmens (10) aus möglich ist.

5. Ein System gemäß Anspruch 2 oder 3, **dadurch gekennzeichnet, dass** jeder der genannten Sitze (17) am hinteren Ende der Wand (140) des Rahmens (100) offen ist, so dass das Einsetzen des Geräts (1) von der Rückseite des Rahmens (100) aus möglich ist.

6. Ein System gemäß Anspruch 1 und einem oder mehreren der vorausgegangenen Ansprüche, **dadurch gekennzeichnet, dass** die genannten Elemente zur Schnappmontage der Geräte in die Wände (40, 140) des genannten Tragrahmens (10, 100) aus flexiblen Zähnen (11, 111) bestehen, die in entsprechende Hohlräume (5) einrasten, die in den Geräten (1) vorgesehen sind.

7. Ein System gemäß Anspruch 6, **dadurch gekennzeichnet, dass** zwischen den genannten Zähnen (11, 111) und den genannten Wänden (40, 140) Längshohlräume (14, 114) bestehen, die als Führungen für parallele Schienen (6) wirken, die längs in den genannten Geräten (1) angeordnet sind.

8. Ein System gemäß Anspruch 6 oder 7, **dadurch gekennzeichnet, dass** die genannten Zähne (11) quer eine Einkerbung (12) aufweisen, in die ein quer in dem genannten Gerät (1) angeordnetes Kreuzstück (7) einschnappt, um die Verriegelung des Geräts (1) am Tragrahmen (10) sicherzustellen.

9. Ein System gemäß dem Anspruch 6 oder 7, **dadurch gekennzeichnet, dass** die genannten Zähne (111) quer einen Vorsprung (130) aufweisen, der dazu bestimmt ist, gegen ein Kreuzstück (7) zu stoßen, das quer in dem Gerät (1) angeordnet ist, um sicherzustellen, dass das Gerät (1) am Tragrahmen (100) verriegelt ist.

10. Ein System gemäß einem beliebigen der vorausgegangenen Ansprüche, **dadurch gekennzeichnet, dass** eine Abdeckplatte (20) vorgesehen ist, die den Rahmen (10) abdeckt, wenn die Geräte montiert worden sind, wobei die genannte Abdeckplatte (20) Flügel (21) aufweist, die dazu bestimmt sind, in entsprechende Hohlräume (13) des Rahmens eingesetzt zu werden, um die Zähne (11) zu arretieren.

11. Ein System gemäß Anspruch 10, **dadurch gekennzeichnet, dass** die genannten Flügel (21) der Abdeckplatte (20) ein Verbindungselement zwischen der genannten Platte und der Einheit Rahmen (10)-Geräte (1) darstellen.

## Revendications

1. Système de fixation d'appareils électriques (1) dans un châssis de support (10, 100), le châssis (10, 100) ayant une fenêtre (15) aux parois opposées (40, 140) pourvues de dispositifs pour le montage à enclenchement sec d'appareils (1), **caractérisé en ce que** des dispositifs complémentaires (8), (17, 117) constitués respectivement d'ailettes et de logements de coulissement correspondants, ou vice-versa, sont prévus entre lesdits appareils (1) et lesdites parois opposées (40, 140) du châssis, de sorte qu'un engagement à intégration empêchant l'éloignement desdites parois opposées (40, 140) est réalisé dans la position de fin de course des ailettes (8) dans les logements (17, 117).

2. Système selon la revendication 1, où lesdites ailettes (8) sont prévues sur l'appareil (1) et lesdits logements (17, 117) sur les parois opposées (40, 140) du châssis (10, 100).

3. Système selon la revendication 1 ou 2, **caractérisé en ce que** lesdites ailettes (8) ont une forme de queue-d'aronde avec deux dents opposées dans le sens axial en mesure de s'introduire sélectivement dans des cavités correspondantes (35, 135) prévues sur le fond desdits logements (17, 117).

4. Système selon la revendication 2 ou 3, **caractérisé en ce que** chacun desdits logements (17) est ouvert dans la partie avant de la paroi (40) du châssis (10) de manière à permettre l'introduction de l'appareil (1) par le devant du châssis (10).

5. Système selon la revendication 2 ou 3, **caractérisé en ce que** chacun desdits logements (17) est ouvert dans la partie arrière de la paroi (140) du châssis (100) de manière à permettre l'introduction de l'appareil (1) par la partie arrière du châssis (100).

6. Système selon la revendication 1 ou selon une ou plusieurs revendications parmi les revendications susmentionnées, **caractérisé en ce que** lesdits dispositifs pour le montage à enclenchement sec des appareils dans les parois (40, 140) dudit support (10, 100) sont constitués de dents flexibles (11, 111) qui s'engagent dans des cavités respectives (5) prévues dans les appareils (1).

7. Système selon la revendication 6, **caractérisé en ce que** des cavités longitudinales (14, 114), ayant la fonction de guides pour des rails parallèles (6) placés longitudinalement dans lesdits appareils (1), sont réalisées entre lesdites dents (11, 111) et lesdites parois (40, 140).

8. Système selon la revendication 6 ou 7, **caractérisé en ce que** lesdites dents (11) possèdent une entaille transversale (12) où une barre de traverse (7) placée transversalement dans ledit appareil (1) s'engage par enclenchement sec pour assurer le verrouillage de l'appareil (1) sur le châssis de support (10).

9. Système selon la revendication 6 ou 7, **caractérisé en ce que** lesdites dents (111) possèdent transversalement une saillie (130) destinée à entrer en butée contre une barre de traverse (7) placée transversalement dans l'appareil (1) pour assurer le verrouillage de l'appareil (1) sur le châssis de support (100).

10. Système selon une revendication quelconque parmi les revendications susmentionnées, **caractérisé en ce qu'**une plaque de couverture (20) est prévue de façon à couvrir le châssis (10), une fois que les appareils ont été montés, ladite plaque de couverture (20) présentant des ailettes (21) destinées à être introduites dans des cavités correspondantes (13) du châssis pour verrouiller les dents (11).

11. Système selon la revendication 10, **caractérisé en ce que** lesdites ailettes (21) de la plaque de couverture (20) sont un élément de raccord entre ladite plaque et l'ensemble du châssis (10) et les appareils (1).
